# EUROPÄISCHE PATENTSCHRIFT

(11) **EP 1 183 215 B1**
(45) Veröffentlichungstag und Bekanntmachung des Hinweises auf die Patenterteilung: **19.11.2003**
(21) Anmeldenummer: 00926889.7
(22) Anmeldetag: 12.04.2000
(51) Int. Cl.: C03C 11/00, C03B 19/08

(54) **VERFAHREN ZUR HERSTELLUNG HOMOGENER SCHAUMGLASGRANUALTE**
METHOD FOR PRODUCING HOMOGENEOUS FOAMED GLASS GRANULES
PROCEDE DE FABRICATION DE GRANULATS DE VERRE MULTICELLULAIRE

(30) Priorität: 12.04.1999 DE 19916465
(43) Veröffentlichungstag der Anmeldung: 06.03.2002
(73) Patentinhaber: Quarzwerke GmbH, 50226 Frechen (DE)
(72) Erfinder: KELLERMANN, Max, D-50389 Wesseling (DE); FENTEN, Norbert, D-50189 Elsdorf (DE); SCHOTT, Petra, D-52078 Aachen (DE)
(74) Vertreter: Sternagel, Fleischer, Godemeyer & Partner Patentanwälte
(86) Internationale Anmeldenummer: EP0003282
(87) Internationale Veröffentlichungsnummer: WO00061512

(56) Entgegenhaltungen:
- EP-A- 0 678 482
- DE-A- 3 941 732
- DE-A- 4 023 561
- US-A- 4 430 107
- PATENT ABSTRACTS OF JAPAN vol. 014, no. 330 (C-0741), 16. Juli 1990 (1990-07-16) & JP 02 120255 A (ASAHI CHEM IND CO LTD), 8. Mai 1990 (1990-05-08)
- PATENT ABSTRACTS OF JAPAN vol. 014, no. 290 (C-0731), 22. Juni 1990 (1990-06-22) & JP 02 092843 A (ASAHI CHEM IND CO LTD), 3. April 1990 (1990-04-03)

## Beschreibung

Gegenstand der Erfindung ist ein Verfahren zur Herstellung von auf Silikat basierenden Schaumprodukten geringer Dichte. Ein weiterer Gegenstand sind die mit diesem Verfahren hergestellten Schaumprodukte. Diese Schaumprodukte bestehen im allgemeinen aus gelösten Silikaten mit verschiedenen Zusatzstoffen. Hierzu werden z.B. Alkalimetallhydroxid-, Alkalimetallsilikatlösungen, Kieselgur, Flugasche oder Reisschalenasche gemischt. Die verschiedenen Komponenten reagieren bei Temperatureinwirkung miteinander. Anschließend muß aus dieser Mischung das überschüssige Wasser entfernt werden, um ein lagerstabiles, hartes glasiges Material zu erhalten, das durch Mahlen und Sieben zu Partikeln mit geeignetem Komdurchmesser verarbeitet wird. Danach werden die so erhaltenen festen Partikel durch weiteres Erhitzen aufgeschäumt.

Derartige Schaumprodukte können als Isoliermaterial verwendet werden, da sie unbrennbar sind und eine sehr geringe Dichte aufweisen. Sie können weiterhin als Formkörper für Isolationszwecke eingesetzt werden und sind damit eine Alternative zu den entsprechenden Polystyrolen, die häufig für diese Zwecke verwendet werden.

Die EP 0 076 393-A1 beschreibt ein Verfahren zur Herstellung von Schaumprodukten, bei dem als SiO₂-haltige Komponente Flugstaub oder Flugasche eingesetzt wird, mit einem SiO₂-Gehalt von 89 bis 98 Gew.-%. Der Flugstaub oder die Flugasche wird mit wässriger Alkalimetallsilikat und/oder wässriger Alkalimetallhydroxidlösung gemischt, wobei gegebenenfalls zusätzlich Wasser hinzugefügt wird. Das Gemisch wird dann auf Temperaturen bis 100 °C erhitzt und danach getrocknet und so erhärtet. Die erkaltete erhärtete Masse wird zerkleinert, abgesiebt und anschließend das erhaltene feste Produkt durch erneutes Erhitzen auf Temperaturen im Bereich von 150 bis 300 °C aufgebläht. Mit diesem Verfahren werden Schaumprodukte erhalten, die Schüttdichten aufweisen, die zwischen 0,1 bis 0,7 g/cm³ besitzen und einen Korndurchmesser von 1,2 bis 5 mm aufweisen.

EP 0 084 594-A1 beschreibt ein ähnliches Verfahren zur Herstellung von Schaumprodukten. Bei diesem Verfahren wird im Unterschied zum vorgenannten Stand der Technik Flugstaub oder Flugasche mit einem SiO₂-Gehalt von 45 bis 98 Gew.-% eingesetzt. Bei der Reaktion wird das Gemisch in einer auf Temperaturen im Bereich von 100 bis 150 °C aufgeheizten Misch- und Knetvorrichtung während einer Dauer von 10 bis 60 Minuten zu einer plastischen Masse verarbeitet und gleichzeitig zur Reaktion gebracht. Das erhaltene homogene Reaktionsprodukt wird noch im plastischen Zustand mit mehr als 50 Gew-% Wassergehalt ausgetragen, durch eine Lochscheibe gepreßt und mittels einer Schneidvorrichtung zerkleinert. Das Aufschäumen erfolgt dann bei Temperaturen von 200 bis 300 °C für eine Zeitdauer von 10 bis 15 Minuten. Auch bei diesem Verfahren werden Schaumprodukte erhalten mit Schüttdichten, die im Bereich von 0,1 bis 0,7 g/cm³ liegen und einen Korndurchmesser von 1 bis 15 mm aufweisen.

Weitere Verfahren zur Herstellung von Schaumprodukten werden in der EP 0 678 482 A1 und der WO 95/07809 A1 beschrieben.

Obschon derartige auf Silikat basierende Schaumprodukte schon seit mehr als 20 Jahren bekannt sind, haben diese Produkte noch keine allgemeine Akzeptanz im Markt gefunden. Dies ist unter anderem begründet in dem aufwendigen Herstellungsverfahren mit den Verfahrensschritten Erhitzen einer flüssigen Suspension, Trocknen und Aushärten eines festen Materials, Brechen und Sieben und thermisches Blähen. Weiterhin treten Anbackungs- und Verunreinigungsprobleme beim Übergang von der flüssigen in die feste Phase auf und die eingesetzten Rohstoffe Flugstaub und Wasserglas sind verhältnismäßig teuer.

Die Verfahren des Standes der Technik besitzen weiterhin den Nachteil, daß die erhaltenen Schaumprodukte noch relativ hohe Partikeldurchmesser und hohe Schüttdichten aufweisen. Bei den Verfahren des Standes der Technik muß weiterhin zur Erzielung geeigneter Produkte das Reaktionsprodukt vor dem Aufblähen immer getrocknet werden, um den Wassergehalt zu reduzieren. Beim Trocknen treten jedoch erhebliche technische Schwierigkeiten auf, wie sie im einleitenden Teil der WO 95/07809 A1 beschrieben werden.

Die technische Aufgabe der Erfindung ist es daher, Schaumprodukte herzustellen, die besonders feinteilig sind, eine besonders geringe Schüttdichte aufweisen und bei denen ein preiswerter Ausgangsstoff, nämlich bevorzugt Recyclingglas, verwendet werden kann. Weiterhin soll das Verfahren dadurch vereinfacht werden, daß Glasrohstoffe eingesetzt werden, die ein Reaktionsprodukt mit einem Wassergehalt von < 35 Gew.-% ergeben, so daß der bisher übliche Trocknungsschritt entfallen kann.

Diese technische Aufgabe wird gelöst durch ein Verfahren zur Herstellung homogener Schaumprodukte wobei man
a. Gläser ausgewählt aus der Gruppe Recyclingglas, synthetisches Glas, mineralisches Glas natürlichen Ursprungs oder Gemische derselben mit einer wäßrigen Alkalimetallhydroxid-Lösung und/oder Alkalimetallsilikatlösung als wäßrige Suspension bei Temperaturen von 60 bis 120° C bei Normaldruck reagieren läßt,
b. das erhaltene Reaktionsprodukt als viskose Masse austrägt, granuliert, vorzugsweise im viskosen Zusatnd und so lange abkühlt bis eine feste Granulatkörnung vorliegt,
c. das Granulat durch Erhitzen aufbläht, wobei das Erhitzen in ein oder zwei Stufen erfolgen kann
und das einstufige Erhitzen bei Temperaturen von 200 bis 300°C für eine Zeitdauer von 2 Millisekunden bis 15 min oder bei Temperaturen von 400 bis 800°C für eine Zeitdauer von 2 Millisekunden bis 15 min erfolgt
und das zweistufige Erhitzen in der ersten Stufe bei Temperaturen von 200 bis 300°C für eine Zeitdauer von 2 Millisekunden bis 15 min erfolgt und in der zweiten Stufe bei Temperaturen von 400 bis 800°C für eine Zeitdauer von 2 Millisekunden bis 15 min erfolgt.

In einer besonderen Ausführungsform erfolgt das Erhitzen des Gemisches bei Temperaturen von 120 bis 250 °C bei Autoklavenatmosphäre von 2 bis 15 bar.

Die verwendeten Gläser enthalten bevorzugt 60 bis 85 Gew.-% SiO₂, 4 bis 27 Gew.-% Na₂O, 0 bis 5 Gew.-% K₂O, 0 bis 8 Gew.-% CaO, 0 bis 5 Gew.-% Al₂O₃, 0 bis 14 Gew.-% B₂O₃, 0 bis 20 Gew.-% PbO, 0 bis 5 Gew.-% MgO und 0 bis 8 Gew.-% BaO.

Besonders bevorzugt enthalten die verwendeten Gläser die folgende Zusammensetzung: 65 bis 80 Gew.-% SiO₂, 4 bis 14 Gew.-% Na₂O, 0 bis 3 Gew.-% K₂O, 0 bis 3 Gew.-% CaO, 1 bis 3 Gew.-% Al₂O₃, 5 bis 13 Gew.-% B₂O₃, 0 bis 5 Gew.-% PbO, 0 bis 3 Gew.-% MgO und 0 bis 3 Gew.-% BaO.

Der Einsatz von PbO-haltigen Gläsern erfolgt besonders bevorzugt für Anwendungen im Bereich des Schallschutzes. Das Aufblähen des Granulates wird vorzugsweise bei 250 bis 280 °C und/oder bei 550 bis 580 °C durchgeführt.

In einer bevorzugten Ausführungsform erfolgt das Erhitzen des Granulates beim Aufblähen mittels Mikrowelle, IR-Strahlung, elektrischer Induktion, durch heiße Gase oder indirekte Wärmestrahlung.

Es ist weiterhin in einer besondem Ausführungsform möglich, in das Innere der Schaumprodukte Silikone einzubringen. Zusätzlich können Silikone aber auch in herkömmlicher Weise auf die Oberfläche aufgebracht werden. Zur Verbesserung der Druckfestigkeit werden bevorzugt Füll- und Verstärkungsstoffe ausgewählt aus der Gruppe Perlit, Kaolin, Metakaolin, Glimmer, Wollastonit, Glasfaser, Cristobalit, Quarz, Talkum, Sepiolith, Baryt, Feldspat, Bariumsulfat, Zinkoxid, Titandioxid oder kalzinierter Bauxit oder Gemische derselben zugegeben.

Die so hergestellten homogenen Schaumprodukte besitzen den Vorteil, daß sie aus preiswerten Rohstoffen, nämlich Recyclinggläsern, hergestellt werden, die bei Einwirkung von Temperatur ein Produkt mit hoher Porosität und niedriger Dichte bei ausreichender Festigkeit entstehen läßt. Es werden weiterhin keine zusätzlichen Komponenten wie Härter- oder Treibmittel benötigt. Die Aufblähdauer wird kurz gehalten und kann bei relativ niedrigen Temperaturen durchgeführt werden. Es wurde festgestellt, daß insbesondere durch das Aufschäumen in zwei Stufen Produkte hergestellt werden können, die sehr geringe Schüttdichten von 0,01 bis 0,05 g/cm³ bei einem Komdurchmesser von 1 bis 15 mm aufweisen. Die Leichtstoffe weisen in Abhängigkeit von ihrer Schüttdichte eine gute Festigkeit und Volumenstabilität auf. Sie besitzen weiterhin eine weiße Farbe, mikroporöse Zellenstruktur und sind sogar auch als kugelförmige Produkte herstellbar. Weiterhin ist die Herstellung von geschlossenen wie auch offenen Porenstrukturen möglich und die Produkte können hydrophil oder hydrophob ausgestattet werden.

Die nach dem beschriebenen Verfahren hergestellten Produkte können insbesondere als Isoliermaterial, als Leichtzuschlagstoff für Gips- oder Zementsysteme, als Schallabsorber und für solche Zwecke Verwendung finden, bei denen unbrennbares leichtes Material erwünscht ist. Auch werden derartige Schaumprodukte als Zuschlagstoffe in Baustoffen, wie z.B. Putze und Mörtel verwendet. Neben der Verwendung als Schüttgut können auch entsprechende Formkörper und Platten zum Beispiel für Isolations- oder Schallabsorptionszwecke hergestellt werden. Die nicht geschäumten Granulate sind hart, lagerfähig, nicht zusammenbackend und transportfähig als freifließende Schüttung. Nachfolgend wird das Herstellungsverfahren ausführlicher erläutert. Als Ausgangsstoff wird bevorzugt Recycling-Borglas oder Neonröhren-Recyclingglas eingesetzt. Diese Gläser werden mit Natronlauge und/oder Natronwasserglas 37/40 Henkel KGaA vermischt, es wird gegebenenfalls Wasser zugegeben und diese Suspension bei Temperaturen von 60 bis 120 °C bei Normaldruck gemischt. Unter Umrühren werden die Rohstoffe bei 60 bis 120°C zehn Minuten bis drei Stunden lang bei Normaldruck oder Autoklavendruck zur Reaktion gebracht.

Alternativ ist es auch möglich, diese Reaktion im Autoklaven bei Temperaturen von 120 bis 250 °C und Drücken von 2 bis 15 bar durchzuführen.

Es bildet sich eine homogene, viskose Masse, die in noch plastischem Zustand ausgetragen, anschließend durch eine Lochscheibe gepreßt und durch eine an der Außenseite der Lochscheibe liegende Schneidvorrichtung zerkleinert wird. Die granulierte Masse wird mit Quarzmehlpulver bepudert, was mögliche Agglomerationen der Granalien sowie mögliche Anbackungen vermeidet. Man erhält nach Abkühlung auf Raumtemperatur trockene, harte Granulatteilchen. Ein zusätzlicher Trocknungsschritt ist nicht notwendig.

In einem weiteren Verfahrensschritt wird dann das erhaltenen Produkt aufgebläht, dies erfolgt in ein oder zwei Stufen.

Beim einstufigen Aufblähen wird das Reaktionsprodukt für 2 Millisekunden bis 15 min auf Temperaturen von 200 bis 300 °C oder für eine Zeitdauer von 2 Millisekunden bis 15 min auf Temperaturen von 400 bis 800°C erhitzt.

Beim zweistufigen Aufblähen wird das Produkt in einem ersten Schritt durch Erhitzen auf Temperaturen von 200 bis 300 °C, vorzugsweise 250 bis 280 °C, zum Aufschäumen gebracht. Dies kann beispielsweise in einem Laborofen geschehen. In einem zweiten Schritt wird das aufgeschäumte Produkt dann durch Erhitzen auf Temperaturen von 400 bis 800 °C, vorzugsweise 550 bis 580 °C zum weiteren Aufschäumen gebracht. Der zweite Aufblähschritt wird bevorzugt in einem Flugstromcalcinator durchgeführt.

In einer bevorzugten Ausführungsform erfolgt das Aufblähen insbesondere zur Herstellung feinteiliger Schaumprodukte in einem Pulsationsreaktor im Gasstrom. Bei Anwendung des Pulsationsreaktors findet das Aufblähen in sehr kurzer Zeit innerhalb von Sekundenbruchteilen statt. Das Aufblähen kann aber auch in einem herkömmlichen Trockenschrank bzw. Heizofen erfolgen.

Nach dem Abkühlen erhält man Schaumprodukte mit einem geringen Schüttvolumen von 0,01 bis 0,05g/cm³ und guter Kornstabilität und Druckfestigkeit.

Bei der Reaktion der Gläser mit der Alkalimetallhydroxid -und/oder Alkalimetallsilikat- Lösung wurde festgestellt, daß die bevorzugten Reaktionstemperaturen im Bereich von 80 bis 120 °C liegen. Weiterhin ist eine hohe relative Luftfeuchtigkeit während der Reaktion wünschenswert um unerwünschte Feuchtigkeitsverluste, insbesondere der Rezepturanteile mit direktem Luft/Feststoffkontakt zu vermeiden. Eine relative Luftfeuchtigkeit von 90 % und mehr ist wünschenswert.

Weiterhin kann die Reaktion der genannten Rohstoffe mit Wasser und miteinander durch Erhöhung von Temperatur und Druck beschleunigt werden. So kann die Rohstoffmischung als Suspension in Wasser in Schalen gefüllt werden, die im Autoklaven bei Drücken von 2 bis 15 bar und vorzugsweise 120 bis 250 °C zur blähfähigen Silikatmischung reagieren. Durch schnelles Ablassen des Autoklavendruckes expandiert die blähfähige Silikatmischung durch Freisetzen von Wasserdampf. Die hochviskos vorliegende Silikatmischung vergrößert das eingenommene Raumvolumen um ein Vielfaches. Der Wassergehalt der Silikatmischung wird dabei um mehr als 5 Gew.-% Wasseranteil verringert. Die vorgeschäumte Silikatmischung war weiterhin blähfähig. Überraschenderweise ergab sich als Vorteil bei Verwendung der porenreichen Silikatmischung, daß die so hergestellten Partikel eine weitgehend offene Porenstruktur aufwiesen. Zu feinstteiligem Silikatgranulat zerkleinert ermöglicht es die Herstellung von Schaumpartikeln mit Korngrößen von einigen Mikrometern. Solche Mikroschaumpartikel wurden hergestellt durch schnelles Einbringen externer Energie im Pulsationsreaktor.

Thermisches Blähen des Granulates erfolgt durch schnelles Einbringen externer Energie in die Granulate, beispielsweise über Mikrowellen, Infrarotstrahlung, elektrische Induktion, heiße Gase oder indirekte Wärmestrahlung.

Feinteiliger Schaum im Komgrößenbereich von 100 bis 3000 um kann mittels Sprühtrocknung hergestellt werden wenn der Temperaturgradient im Sprühtrockner auf etwa 500 °C erhöht wird. Es wurden pumpfähige, wässerige Rohmischungen auf Basis von Borglas im Sprühtrockner bei Gaseintrittstemperaturen in Höhe von 500 bis 600 °C versprüht. Hierbei wurde zuerst das überschüssige Wasser verdampft. Anschließend wurden die Sprühkömer gebläht. Der Restwassergehalt betrug hierbei < 5 Gew.-%, das Schüttvolumengewicht 50 bis 200 g/l.

Der Restwassergehalt ist von Bedeutung für den Blähprozeß; zum Erreichen von kugelförmigen Blähprodukten sollte eine Restfeuchte von 20 bis 35 Gew.-% vorliegen. Bei einem abspaltbarem Wassergehalt > 35 Gew.-% werden weiterhin blähfähige Granulate hergestellt. Allerdings führen derartig hohe Wassergehalte bei 500 bis 600 °C bei einstufigem Aufblähen wie in der EP 0 84 594 beschrieben zu verstärkten Agglomerationen zwischen den geblähten Körnungen sowie zu einer Mischung von Mikro- und Makroporen. Bei einem abspaltbarem Wassergehalt < 20 Gew.-% werden weiterhin blähfähige Granulate hergestellt. Allerdings führen derartig niedrige Wassergehalte nicht zu kugelförmigen Körnungen. Die geblähten Granalien weisen eine eher splitterige Komform auf. In den Schaumprodukten, die nach dem erfindungsgemäßen Verfahren hergestellt wurden, liegen Wasseranteile sowohl als physikalisch gebundenes Wasser (Feuchte), als auch als chemisch gebundenes Wasser (Hydratwasser) vor. Diese Wasseranteile sowie mögliche in Gitterstrukturen gebundene Wasseranteile werden mit dem Begriff "abspaltbare Wasseranteile" zusammengefaßt.

Zur Erniedrigung der Schüttdichte und Erhöhung der Festigkeit werden bevorzugt 0,01 bis 5, vorzugsweise 0,5 bis 2,0 Gew-%, OH-funktionelle wasserverdünnbare Additive zugegeben. Besonders bevorzugt sind Glycerin und/oder Ethylenglykol.

Für den Anwendungsfall einer wasserabweisendenden Stoffeigenschaft werden Silikone verwendet. Die Silikone können sowohl auf die Oberflächen des geblähten Silikatleichtschaumes gesprüht werden, als auch der Silikatrezeptur bereits zu Beginn der Herstellung in flüssiger Form, zum Beispiel der Wasserkomponente untergemischt werden. Obschon die wasserfreien Silikone bei Raumtemperatur praktisch unlöslich in Wasser sind, konnte bei letztgenanntem Verfahren das nicht-wässrige Silikon in der wässrigen Silikatphase emulgiert werden. Es wurde überraschenderweise festgestellt, daß die Silikat/Silikonöl-Emulsion auch in den nachfolgenden Verfahrensschritten des Erhitzens und Blähens nicht entmischt, so daß es möglich ist auch bei geringen Silikonölmasse-Anteilen jedes Granulatkorn mit einer definierten Menge Silikonöl herzustellen.

Beim Aufschäumen führt der Silikonöl-Anteil in den Granulatkörnem zu einer Hydrophobierung der Mikroporenstruktur des Silikatschaumes, die selbst bei Aufblähtemperaturen von 550 °C erhalten bleibt. Die ab 250°C beginnende thermische Zersetzung der Silikonöl-Struktur wurde überraschenderweise nicht festgestellt. Obwohl die Silikonketten möglicherweise zu kürzeren Ketten gecrackt werden, verlieren sie nicht ihre hydrophobierende Wirkung. So wird vermutet, daß dieser Effekt auf die kühlende Wirkung des entstehenden Wasserdampfes, sowie der thermisch isolierenden Schaumstruktur, zurückzuführen ist. Weiterhin ist es möglich, daß der im Inneren der Granulatteilchen verringerte Sauerstoffgehalt sowie der dispergierende Einfluß des sich bildenden Wasserdampfes eine weitere Rolle spielt.

Durch Zugabe von Silikonen in Mengen von 0,05 bis 3, bevorzugt 1 Gew.-%, konnten innen und/oder außen hydrophobierte Schaumpartikel hergestellt werden. Durch Verlängerung der Verweilzeit der sich bildenden Schaumpartikel auf ca. 3 min im Kammerofen in der Temperaturzone von 550 °C konnten die Silikone der äußeren Schaumhülle definiert zerstört werden obwohl die Silikone im Inneren der Schaumpartikel unversehrt blieben. Dies ist für zahlreiche Anwendungen von großer Bedeutung, die zum Beispiel in wässrigen gips- bzw. zementgebundenen Systemen gute Benetzung und Anbindung an eine hydrophile Oberfläche bevorzugen, aber gleichzeitig einen geringen Wasseranspruch des Leichtzuschlagstoffes benötigen. Insbesondere bei Kombruch, der im Inneren hydrophobierten Partikel bewirkt die dargestellte Eigenschaft eine deutliche Verbesserung der anwendungstechnischen Verarbeitung.

Die nachfolgenden Beispiele sollen den Gegenstand der Erfindung näher erläutern ohne ihn zu beschränken.

### BEISPIELE

### Beispiel 1

82 Gewichtsteile gemahlenes Recyclingborglas der chemischen Zusammensetzung 4 Gew.-% Na₂O, 0,5 Gew.-% K₂O, 80 Gew.-% SiO₂, 2 Gew.-% Al₂O₃, 13,5 Gew.-% B₂O₃ werden mit 18 Gewichtsteilen NaOH gemischt. Es werden 40 Gewichtsteile Wasser hinzugegeben und bei 100 bis 120°C gemischt. Die Reaktion wird 20 min lang bei Normaldruck durchgeführt. Man erhält eine homogene viskosen Masse, die in plastischem Zustand ausgetragen und anschließend durch eine Lochscheibe gepreßt wird. Durch eine an der Außenseite der Lochscheibe liegende Schneidvorrichtung wird die Masse zerkleinert und anschließend mit Quarzmehlpulver bepudert, welches mögliche Agglomerationen der Granalien sowie Anbackungen vermeidet. Man erhält nach Abkühlen auf Raumtemperatur trockene, harte Granulatteilchen.

Das Produkt wird als statische Schüttung anschließend durch Erhitzen im Laborofen in zwei Stufen zum Aufblähen gebracht. Im ersten Schritt erhitzt man auf Temperaturen von 250 °C für 15 Minuten im Laborofen. Im zweiten Schritt erhitzt man auf Temperaturen von 550 °C im Flugstromcalcinator im direkten Kontakt mit heißen Gasen für 1 Sekunde.

Alternativ kann man im Laborofen das Granulat 1 stufig bei 280°C oder alternativ bei 550°C aufschäumen. Man erhält Schaumprodukte mit folgenden Eigenschaften und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1 stufig 280°C | 160 | 1,5 | 1,2 |
| 1stufig 550°C | 60 | 0,25 | 0.2 |
| 2stufig | 50 | 0,2 | 0,1 |

Der Gewichtsverlust der Körnung 1 - 2mm nach Aufschäumen bei 280° C beträgt nach 1 h kochen 2 Gew.%. Die chemische Zusammensetzung der Rezeptur (wasserfrei) beträgt:
17,5 % Na₂O; 0,5 % K₂O; 1,8 % Al₂O₃; 69,0 % SiO₂ und 11,2% B₂O₃

### Beispiel 2

Wie im Beispiel 1 wird ein Schaumprodukt hergestellt, daß aus folgenden Komponenten besteht:

73 Gewichtsteile Recyclingborglas, 27 Gewichtsteile NaOH und 40 Gewichtsteile Wasser. Man erhält Schaumprodukte mit folgenden Eigenschaften und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1stufig 280°C | 32 | 0,1 | 0,1 |
| 1stufig 550°C | 23 | 0,06 | 0,1 |
| 2stufig | 25 | 0,07 | 0,1 |

Die chemische Zusammensetzung der Rezeptur (wasserfrei) beträgt:
25,5 % Na₂O; 0,4 % K₂O; 1,6 % Al₂O₃; 10,0 % B₂O₃; 62,5 % SiO₂

### Beispiel 3

Wie in Beispiel 1 wird ein Schaumprodukt hergestellt, daß aus folgenden Komponenten besteht: 87,8 Gewichtsteile Recyclingborglas, 12,2 Gewichtsteile NaOH und 40,0 Gewichtsteilen Wasser. Man erhält Schaumprodukte mit folgenden Schüttvolumen und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1stufig 280°C | 600 | nicht best. | nicht best. |
| 1stufig 550°C | 230 | 3,5 | 2,1 |
| 2stufig | 190 | 2,8 | 1,7 |

Die chemische Zusammensetzung der Rezeptur (wasserfrei) beträgt:
13,1 % Na₂O; 0,5 % K₂O; 1,8 % Al₂O₃; 72,8 % SiO₂ und 11,8 % B₂O₃

### Beispiel 4

Wie in Beispiel 1 wird ein Schaumprodukt hergestellt, daß aus folgenden Komponenten besteht: 73,0 Gewichtsteile Natriumsilikatglas, 4,2 Gewichtsteile NaOH, 19,0 Gewichtsteile Borax (Na₂B₄O₇ • 5 H₂O), 3,8 Gewichtsteile Metakaolin und 40 Gewichtsteile Wasser. Man erhält Schaumprodukte mit folgenden Schüttvolumen und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1stufig 280°C | 36 | 0,11 | 0,1 |
| 1stufig 550°C | 25 | 0,05 | 0,1 |
| 2stufig | 24 | 0,05 | 0,1 |

Der Gewichtsverlust der Körnung 1 - 2mm nach Aufschäumen bei 550° C beträgt nach 1 h kochen 75 Gew.%. Die chemische Zusammensetzung der Rezeptur (wasserfrei) beträgt:
25,9 % Na₂O; 1,7 % Al₂O₃; 62,3 % SiO₂ und 10,0 % B₂O₃

### Beispiel 5

Wie in Beispiel 1 wird ein Schaumglasprodukt hergestellt, daß aus folgenden Komponenten besteht: 45,0 Gewichtsteile Natriumsilikatglas, 3,9 Gewichtsteile NaOH, 13,5 Gewichtsteile Borax (Na₂B₄O₇ • 5 H₂O) und 37,6 Gewichtsteile Perlit und 40 Gewichtsteile Wasser. Man erhält Schaumprodukte mit folgenden Schüttvolumen und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1 stufig 280°C | 350 | 2,5 | 1,8 |
| 1 stufig 550°C | 110 | 1,7 | 0,4 |
| 2stufig | 100 | 1,7 | 0,4 |

Der Gewichtsverlust der Körnung 1 - 2mm nach Aufschäumen bei 550° C beträgt nach 1 h kochen 4,0 Gew.%. Die chemische Zusammensetzung der Rezeptur (wasserfrei) beträgt:
18,2 % Na₂O; 5,4 % Al₂O₃; 67,5 % SiO₂; 6,9 % B₂O₃ und 2,0 % K₂O

### Beispiel 6

Wie in Beispiel 1 wird ein Schaumglasprodukt hergestellt, daß aus folgenden Komponenten besteht: 38,0 Gewichtsteile Natriumsilikatglas, 50,0 Gewichtsteile Flachglasmehl, 9,9 Gewichtsteile Borax (Na₂B₄O₇ • 5 H₂O), 2,1 Gewichtsteile NaOH und 40 Gewichtsteile Wasser. Man erhält Schaumprodukte mit folgenden Schüttvolumen und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1stufig 550°C | 200 | 3,4 | 2,0 |
| 2stufig | 160 | 2,3 | 1,5 |

Die chemische Zusammensetzung der Rezeptur (wasserfrei) beträgt:
20,3 % Na₂O; 0,9 % Al₂O₃; 67,5 % SiO₂: 5,0 % B₂O₃: 0,4 % K₂O, 4,2% CaO und 1,8 % MgO

### Beispiel 7

Wie in Beispiel 1 wird ein Schaumprodukt hergestellt, daß aus folgenden Komponenten besteht: 28,6 Gewichtsteile Wasserglas 37/40 (Henkel KGaA), 64,3 Gewichtsteile Recycling Neonröhrenaltglas, 5,0 Gewichtsteile Wasser und 7,1 Gewichtsteile NaOH. Man erhält Schaumprodukte mit folgenden Schüttvolumen und Festigkeiten:

| | **SV [g/l]** Körnung 1-2mm | **Festigkeit** Zwick-Presse [N/mm²] | **Festigkeit** n. Georg-Fischer [N/cm²] |
|---|---|---|---|
| 1 stufig 280°C | 180 | 1,2 | 0,8 |
| 1stufig 550°C | 35 | 0,2 | 0,1 |
| 2stufig | 40 | 0,2 | 0,1 |

Die chemische Zusammensetzung der Rezeptur (wasserfrei) beträgt:
20,5% Na₂O; 2,6 % K₂O; 5,6 % PbO; 2,5 % CₐO; 1,7 % MgO; 1,7 % Al₂O₃; 65,3% SiO₂

### Beispiel 8

18 Gewichtsteile NaOH und 82 Gewichtsteile Recyclingborglas werden im Autoklaven mit 40 Gewichtsteilen Wasser bei 250°C zur Reaktion gebracht. Durch schnellste Druckentlastung expandiert die Reaktionsmischung auf ein vielfaches ihres bisherigen Volumens. Die Mischung verliert durch Trocknung 5Gew-% Wasser. Die vorexpandierte Mischung kann ohne großen Kraftaufwand direkt einer Sichterfeinprallmühle aufgegeben werden, wo sie weiter zerkleinert wird. Anschließend wird das feingemahlene Material thermisch im Pulsationsreaktor geschäumt. Man erhält Schaumprodukte kleiner 50µm mit einem Schüttvolumen von 150 g/l. Die Festigkeit der Schüttung erreicht gemessen mit der Zwick-Presse 0,25 N/mm².

### Beispiel 9

Wie im Beispiel 1 wird ein Schaumprodukt hergestellt, das aus folgenden Komponenten besteht: 73 Gewichtsteile Borglas, 27 Gewichtsteile Natronlauge, 0,5 Gewichtsteile Glycerin und 40 Gewichtsteile Wasser. Man erhält Schaumprodukte mit folgenden Eigenschaften und Festigkeiten:

Das Schüttvolumengewicht sowohl nach 1 stufigem Schäumen bei 550°C als auch bei 2 stufigem Schäumen kann auf 10g/l gesenkt werden. Die erzielten Festigkeiten waren zu gering um vergleichend gemessen werden zu können. Das Schüttvolumen nach 1stufigem Schäumen bei 280°C betrug 25 g/l, die Festigkeit ermittelt mit der Zwick-Presse 0,07N/mm².

### Beispiel 10

73 Gewichtsteile Recyclingborglas werden mit 27 Gewichtsteilen NaOH und 100 Gewichtsteilen Wasser in einem Mischer der Bauart Lödige zu einer sprühfähigen Suspension aufbereitet. Das Borglas wird im Lödige Mischer während einer Mischdauer von 4h zur Gänze mit der Natronlauge umgesetzt. Die Mischung wird nun heiß in einen Sprühturm (Fa. Niro) versprüht. Durch Gaseintrittstemperaturen größer 600°C wird der Temperaturgradient im Sprühturm auf 500°C angehoben. Als Produkt werden Sprühgranulate mit einem Schüttvolumengewicht von 80g/l ausgetragen. Die Festigkeit der Granulatschüttung beträgt 0,25N/mm². Die Korngrößenverteilung der Schaumprodukte liegt zwischen 200 und 500µm.

### Bestimmung der Druckbelastbarkeit von Silikatleichtschaum-Körnungen nach Zwick.

100 ml der zu prüfenden Kömung werden in einem Edelstahlzylinder mit einem Durchmesser von 5 cm gefüllt. Die Schüttung im Zylinder wird durch Druck auf einer Presse der Firma Zwick auf ein Volumen von 50 ml verdichtet. Die hierzu benötigte Kraft (N) wird gemessen. Der Quotient aus Druckkraft und Zylinderquerschnittsfläche (1964 mm²) ergibt einen Rechenwert für den Druck mit dem Schüttungen aus dem zu prüfenden Material belastet werden können.

### Bestimmung der Druckbelastbarkeit von Silikatschaumkörnungen nach Georg Fischer.

Das Gerät zur Messung besteht aus einem zweiteiligen Gehäuse, in welchem der Druckstift verbunden mit einem Schwingquarzsensor enthalten ist. Das Gerät mißt und speichert den Maximalwert in N/cm². Die Messung erfolgt dadurch, daß der Druckstift senkrecht zur Oberfläche und kontinuierlich bis zum Anschlag in das zu prüfende Material gedrückt wird. Im Moment, da der Anschlag die Sandoberfläche berührt, wird das Instrument zurückgezogen und der ermittelte Wert abgelesen.

## Patentansprüche

1. Verfahren zur Herstellung homogener Schaumprodukte, wobei man
a. Gläser ausgewählt aus der Gruppe Recyclingglas, synthetisches Glas, mineralisches Glas natürlichen Ursprungs oder Gemische derselben mit einer wäßrigen Alkalimetallhydroxid-Lösung als wäßrige Suspension bei Temperaturen von 60 bis 120° C bei Normaldruck oder im Autoklaven reagieren läßt,
b. das erhaltene Reaktionsprodukt als viskose Masse austrägt, granuliert und so lange abkühlt bis eine feste Granulatkörnung vorliegt,
c. das Granulat durch Erhitzen aufbläht, wobei das Erhitzen in ein oder zwei Stufen erfolgen kann
und das einstufige Erhitzen bei Temperaturen von 200 bis 300°C für eine Zeitdauer von 2 Millisekunden bis 15 min oder bei Temperaturen von 400 bis 800°C für eine Zeitdauer von 2 Millisekunden bis 15 min erfolgt
und das zweistufige Erhitzen in der ersten Stufe bei Temperaturen von 200 bis 300°C für eine Zeitdauer von 2 Millisekunden bis 15 min erfolgt und in der zweiten Stufe bei Temperaturen von 400 bis 800°C für eine Zeitdauer von 2 Millisekunden bis 15 min erfolgt.

2. Verfahren nach Anspruch 1, **dadurch gekennzeichnet, daß** der wässrigen Suspension aus Gläsern und der wässrigen Alkalimetallhydroxid-Lösung eine wässrige Alkalimetallsilikat-Lösung zugefügt wird.

3. Verfahren nach den Ansprüchen 1 oder 2, **dadurch gekennzeichnet, daß** das Erhitzen des Gemisches bei Temperaturen von 120 bis 250°C bei Autoklavenatmosphäre von 2 bis 15 bar erfolgt.

4. Verfahren nach den Ansprüchen 1 bis 3, **dadurch gekennzeichnet, daß** die verwendeten Gläser aus 60 bis 85 Gew.-% SiO₂, 4 bis 27 Gew.-% Na₂O, 0 bis 5 Gew.-% K₂O, 0 bis 8 Gew.-% CaO, 0 bis 5 Gew.-% Al₂O₃, 0 bis 14 Gew.-% B₂O₃, 0 bis 20 Gew.-% PbO, 0 bis 5 Gew.-% MgO und 0 bis 8 Gew.-% BaO enthalten.

5. Verfahren nach Anspruch 4, **dadurch gekennzeichnet, daß** die verwendeten Gläser aus 65 bis 80 Gew.-% SiO₂, 4 bis 14 Gew.-% Na₂O, 0 bis 3 Gew.-% K₂O, 0 bis 3 Gew.-% CaO, 1 bis 3 Gew.-% Al₂O₃, 5 bis 13 Gew.-% B₂O₃, 0 bis 5 Gew.-% PbO, 0 bis 3 Gew.-% MgO und 0 bis 3 Gew.-% BaO enthalten.

6. Verfahren nach den Ansprüchen 1 bis 5, **dadurch gekennzeichnet, daß** das Aufblähen des Granulates bei 250 bis 280 °C und/oder bei 550 bis 580 °C durchgeführt wird.

7. Verfahren nach den Ansprüchen 1 bis 6, **dadurch gekennzeichnet, daß** das Erhitzen des Granulates beim Aufblähen mittels Mikrowelle, elektrischer Induktion, IR-Strahlung, durch heiße Gase oder indirekte Wärmestrahlung erfolgt.

8. Verfahren nach den Ansprüchen 1 bis 7, **dadurch gekennzeichnet, daß** in das Innere der Schaumprodukte nicht-wasserverdünnbare Silikone eingebracht werden.

9. Verfahren nach den Anspruch 8, **dadurch gekennzeichnet, daß** auf die Oberfläche der Schaumprodukte Silikone aufgebracht werden.

10. Verfahren nach den Ansprüchen 1 bis 9, **dadurch gekennzeichnet, daß** zur Verbesserung der Druckfestigkeit Füll- und Verstärkungsstoffe ausgewählt aus der Gruppe Perlit, Kaolin, Metakaolin, Glimmer, Wollastonit, Glasfaser, Cristobalit, Quarz, Talkum, Sepiolith, Baryt, Feldspat, Bariumsulfat, Zinkoxid, Titandioxid oder kalzinierter Bauxit oder Gemische derselben zugegeben werden.

11. Verfahren nach den Ansprüchen 1 bis 10, **dadurch gekennzeichnet, daß** das Aufblähen insbesondere für feinteilige Schaumprodukte in einem Pulsationsreaktor erfolgt.

12. Verfahren nach den Ansprüchen 1 bis 11, **dadurch gekennzeichnet, daß** zur Herstellung feinteiliger Schaumprodukte nach der Reaktion der Komponenten ein schnelles Druckablassen im Autoklaven erfolgt.

13. Verfahren nach den Ansprüchen 11 oder 12, **dadurch gekennzeichnet, daß** feinteilige Schaumprodukte mit einer Komgrößenverteilung <50µm erhältlich sind.

14. Verfahren nach den Ansprüchen 1 bis 13, **dadurch gekennzeichnet, daß** zur Erniedrigung der Schüttdichte und Erhöhung der Festigkeit 0,01 bis 5, vorzugsweise 0,5 bis 2,0 Gew-%, OH-funktionelle wasserverdünnbare Additive zugegeben werden.

15. Verfahren nach den Anspruch 14, **dadurch gekennzeichnet, daß** als OH-funktionelle wasserverdünnbare Additive Glycerin und/oder Ethylenglykol zugegeben werden.

16. Schaumprodukte herstellbar nach dem Verfahren gemäß den Ansprüchen 1 bis 15 mit einer Schüttdichte von 0,01 bis 0,05 g/cm³.

17. Schaumprodukte herstellbar nach dem Verfahren gemäß den Ansprüchen 11 bis 13 mit einer Komgrößenverteilung <50µm.

## Claims

1. A process for the production of homogeneous foam products, wherein
a. glass materials selected from the group of recycling glass, synthetic glass, mineral glass of natural origin, or mixtures thereof are allowed to react with an aqueous alkali metal hydroxide solution in the form of an aqueous suspension at temperatures of from 60 to 120°C at normal pressure or in an autoclave,
b. the resulting reaction product is discharged as a viscous mass, granulated, and cooled until solid granular pellets are obtained,
c. the granulate is expanded by heating, said heating being performable in a single step or in two steps,
said single-step heating being effected at temperatures of from 200 to 300°C for a time period of from 2 milliseconds to 15 minutes or at temperatures of from 400 to 800°C for a time period of from 2 milliseconds to 15 minutes,
said two-step heating being effected at temperatures of from 200 to 300°C for a time period of from 2 milliseconds to 15 minutes in the first step, and at temperatures of from 400 to 800°C for a time period of from 2 milliseconds to 15 minutes in the second step.

2. The process according to claim 1, **characterized in that** the aqueous suspension of glass materials and aqueous alkali metal hydroxide solution is added with an aqueous alkali metal silicate solution.

3. The process according to claim 1 or 2, **characterized in that** the mixture is heated at temperatures of from 120 to 250°C under an autoclave atmosphere of from 2 to 15 bars.

4. The process according to claims 1 to 3, **characterized in that** the glass materials being used include 60 to 85 wt.-% SiO₂, 4 to 27 wt.-% Na₂O, 0 to 5 wt.-% K₂O, 0 to 8 wt.-% CaO, 0 to 5 wt.-% Al₂O₃, 0 to 14 wt.-% B₂O₃, 0 to 20 wt.-% PbO, 0 to 5 wt.-% MgO, and 0 to 8 wt.-% BaO.

5. The process according to claim 4, **characterized in that** the glass materials being used include 65 to 80 wt.-% SiO₂, 4 to 14 wt.-% Na₂O, 0 to 3 wt.-% K₂O, 0 to 3 wt.-% CaO, 1 to 3 wt.-% Al₂O₃, 5 to 13 wt.-% B₂O₃, 0 to 5 wt.-% PbO, 0 to 3 wt.-% MgO, and 0 to 3 wt.-% BaO.

6. The process according to claims 1 to 5, **characterized in that** the granulate is expanded at 250 to 280°C and/or at 550 to 580°C.

7. The process according to claims 1 to 6, **characterized in that** heating of the granulate during expansion is effected using microwaves, electric induction, IR radiation, hot gas, or indirect heat radiation.

8. The process according to claims 1 to 7, **characterized in that** silicones not dilutable with water are incorporated in the interior of the foam products.

9. The process according to claim 8, **characterized in that** silicones are coated on the surface of the foam products.

10. The process according to claims 1 to 9, **characterized in that** fillers and reinforcing materials selected from the group of perlite, kaolin, metakaolin, mica, wollastonite, fiber glass, cristobalite, quartz, talc, sepiolite, baryta, feldspar, barium sulfate, zinc oxide, titanium dioxide, or calcined bauxite or mixtures thereof are added to improve the compressive strength.

11. The process according to claims 1 to 10, **characterized in that** expanding, particularly in the event of fine-particle foam products, is effected in a pulsation reactor.

12. The process according to claims 1 to 11, **characterized in that** following reaction of the components, the pressure in the autoclave is relieved rapidly in the production of fine-particle foam products.

13. The process according to claim 11 or 12, **characterized in that** fine-particle foam products having a grain size distribution of <50 µm can be obtained.

14. The process according to claims 1 to 13, **characterized in that** 0.01 to 5, preferably 0.5 to 2.0 wt.-% of OH-functional water-dilutable additives are added in order to reduce the bulk density and increase the strength.

15. The process according to claim 14, **characterized in that** glycerol and/or ethylene glycol are added as OH-functional water-dilutable additives.

16. Foam products with a bulk density of from 0.01 to 0.05 g/cm³, which can be produced according to the process of claims 1 to 15.

17. Foam products with a grain size distribution of <50 µm, which can be produced according to the process of claims 1 to 13.

## Revendications

1. Procédé de fabrication de produits mousse homogènes, dans lequel
a) on fait réagir des verres choisis dans le groupe comprenant le verre de recyclage, le verre synthétique, le verre minéral d'origine naturelle ou des mélanges de ceux-ci avec une solution aqueuse d'hydroxyde de métal alcalin en tant que suspension aqueuse à des températures comprises entre 60 et 120 °C à la pression atmosphérique ou dans l'autoclave,
b) on décharge le produit réactionnel obtenu en tant que masse visqueuse, le granule et le refroidit jusqu à tant qu'une granulation solide de granulats soit présente,
c) le granulat gonfle par échauffement, l'échauffement pouvant être effectué en une ou en deux étape(s),
et l'échauffement à une étape se fait à des températures comprises entre 200 et 300 °C pour une durée de 2 millisecondes à 15 minutes ou à des températures comprises entre 400 et 800°C pour une durée de 2 millisecondes à 15 minutes,
et l'échauffement à deux étapes se fait, dans la première étape, à des températures de 200 à 300 °C pour une durée de 2 millisecondes à 15 minutes et, dans la deuxième étape, à des températures comprises entre 400 et 800 °C pour une durée de 2 millisecondes à 15 minutes.

2. Procédé selon la revendication 1, **caractérisé par le fait que** l'on ajoute à la suspension aqueuse en verres et à la solution aqueuse d'hydroxyde de métal alcalin une solution aqueuse de silicate de métal alcalin.

3. Procédé selon les revendications 1 ou 2, **caractérisé par le fait que** l'échauffement du mélange est réalisé à des températures comprises entre 120 et 250 °C à l'atmosphère d'autoclave de 2 à 15 bars.

4. Procédé selon les revendications 1 à 3, **caractérisé par le fait que** les verres utilisés contiennent entre 60 et 85 % en poids de SiO₂, entre 4 et 27 % en poids de Na₂O, entre 0 et 5 % en poids de K₂O, entre 0 et 8 % en poids de CaO, entre 0 et 5 % en poids d'Al₂O₃, entre 0 et 14 % en poids de B₂O₃, entre 0 et 20 % en poids de PbO, entre 0 et 5 % en poids de MgO et entre 0 et 8 % en poids de BaO.

5. Procédé selon la revendication 4, **caractérisé par le fait que** les verres utilisés contiennent entre 65 et 80 % en poids de SiO₂, entre 4 et 14 % en poids de Na₂O, entre 0 et 3 % en poids de K₂O, entre 0 et 3 % en poids de CaO, entre 1 et 3 % en poids d'Al₂O₃, entre 5 et 13 % en poids de B₂O₃, entre 0 et 5 % en poids de PbO, entre 0 et 3 % en poids de MgO et entre 0 et 3 % en poids de BaO.

6. Procédé selon les revendications 1 à 5 **caractérisé par le fait que** le gonflement du granulat est effectué à une température comprise entre 250 et 280 °C et/ou à une température comprise entre 550 et 580 °C.

7. Procédé selon les revendications 1 à 6, **caractérisé par le fait que** l'échauffement du granulat lors du gonflement se fait par micro-onde, par induction électrique, par rayonnement infrarouge, par des gaz chauds ou par rayonnement thermique indirect.

8. Procédé selon les revendications 1 à 7, **caractérisé par le fait que** des silicones non-diluables dans l'eau sont introduites dans l'intérieur des produits mousse.

9. Procédé selon la revendication 8, **caractérisé par le fait que** des silicones sont appliquées sur la surface des produits mousse.

10. Procédé selon les revendications 1 à 9, **caractérisé par le fait que**, pour améliorer la résistance à la pression, on ajoute des matières de charge et de renforcement choisies dans le groupe comprenant la perlite, le kaolin, le métakaolin, le mica, la wollastonite, la fibre de verre, la cristobalite, le quartz, le talc, la sépiolite, la baryte, le feldspath, le sulfate de baryum, l'oxyde de zinc, le dioxyde de titane ou la bauxite calcinée ou des mélanges de ceux-ci.

11. Procédé selon les revendications 1 à 10, **caractérisé par le fait que** le gonflement, en particulier pour des produits mousse à fines particules, se fait dans un réacteur à pulsations.

12. Procédé selon les revendications 1 à 11, **caractérisé par le fait que**, pour la fabrication de produits mousse à fines particules, on effectue une évacuation rapide de pression dans l'autoclave après la réaction des composants.

13. Procédé selon les revendications 11 ou 12, **caractérisé par le fait que** des produits mousse à fines particules, avec une répartition granulométrique < 50 µm peuvent être obtenus.

14. Procédé selon les revendications 1 à 13, **caractérisé par le fait que**, pour diminuer la masse volumique apparente et pour augmenter la fermeté, on ajoute entre 0,01 et 5, de préférence entre 0,5 et 2,0 % en poids d'additifs fonctionnels OH diluables dans l'eau.

15. Procédé selon la revendication 14, **caractérisé par le fait que** l'on ajoute de la glycérine et/ou de l'éthylèneglycol comme additifs fonctionnels OH diluables dans l'eau.

16. Produits mousse qui peuvent être fabriqués selon le procédé d'après les revendications 1 à 15 avec une masse volumique apparente de 0,01 à 0,05 g/cm³.

17. Produits mousse qui peuvent être fabriqués selon le procédé d'après les revendications 11 à 13 avec une répartition granulométrique < 50 µm.
